# EUROPEAN PATENT APPLICATION

(11) **EP 0 822 399 A2**
(43) Date of publication of application: **04.02.1998**
(21) Application number: 97500130.6
(22) Date of filing: 01.08.1997
(51) Int. Cl.: G01M 3/32

(54) **System for the detection of leaks in interstitial chambers**

(30) Priority: 02.08.1996 ES 9601732; 02.12.1996 ES 9602549
(71) Applicant: Integral Stocks Control, S.A., 08224 Tarrasa (Barcelona) (ES)
(72) Inventor: Gonzalez Ciriaco, Francisco, 08224 Tarrasa (Barcelona) (ES)
(74) Representative: Urizar Anasagasti, Jesus Maria

(57) **Abstract**

This system comprises a pneumatic control circuit (8), a pneumatic vacuum or pressurised circuit (9) connected to the interstitial chamber (4) by means of a screen valve (10) and an electric control circuit (11). The pneumatic circuit (9) may optionally include measuring apparatus (24 and 25) connected to the electric circuit (11), and having the function of determining the existence of leaks in the interstitial chamber by means of the opening of the valve (10). The system may also optionally include a membrane valve (12) connected to the outlet (5) of the chamber (4) and which forms the means of closing a discharge mouth (13) as defined by the circuit (8), detecting the existence of leaks by falls in pressure suffered by the circuit (8) when the membrane valve (12) opens the mouth (13), due to the loss of vacuum or pressure inside the chamber (4).

## Description

### OBJECT OF THE INVENTION

This invention refers, as its title indicates, to a device which permits the detection of leaks existing in interstitial chambers which are subjected to pressurisation or a vacuum, and which are formed by two surfaces, such as the double wall of a tank.

### BACKGROUND OF THE INVENTION

Under certain circumstances the need arises to detect any possible leaks from a tank that is difficult of access, a representative example of which are buried fuel tanks.

Generally, and for the purpose of detecting any such leak, these tanks are equipped with a double wall which creates an interstitial space subjected to a vacuum or pressure, the said chamber being equipped with an outlet on which there is a vacuum or pressure gauge and a valve which is able to close the said outlet, preventing the loss of the vacuum or pressure to which the inside of the chamber is subjected.

Observation of the measurement apparatus makes it possible to determine whether with the passage of time the correct measurement corresponding to the chamber is being lost, which would indicate a leak either through the interior wall or through the exterior wall of the tank: nevertheless, an important problem arises with this as it is normal with the passage of time for the measurement within the interstitial chamber to gradually decline, due to the existence of micropores in some of the walls, this leading to the need to undertake rigorous monitoring and continuously record the values shown by the measurement apparatus to determine the time taken to lose the said reading, and to thereby deduce if it corresponds to a negligible loss due to the existence of micropores, or if it is an important loss due to the existence of a leak.

### DESCRIPTION OF THE INVENTION

To solve the above - mentioned problems the system for detecting leaks from interstitial chambers which is the object of this invention was developed, permitting the detection of the existence of leaks together with measurement of their importance, while this system also includes the means for raising alarms, these being activated when it detects a drop in the measurement of the vacuum or pressure within the interstitial chamber, together with certain means permitting the regeneration of the vacuum or pressure within the said chamber, on condition that the chamber does not have a leak of such a size that would prevent the attainment of the said regeneration, in which case the alarm would remain activated to show the existence of the leakage.

This system comprises a pneumatic control circuit, a pneumatic vacuum or pressurised circuit which is connected to the outlet of the interstitial chamber by means of a screen valve and an electric control circuit: this system may optionally include a membrane valve mounted on the outlet of the chamber and which includes the means of closing a discharge mouth from the pneumatic control circuit, the said membrane valve bringing about the fall in the pressure of the control circuit when the vacuum or pressure falls within the chamber.

The screen valve which connects the vacuum or pressure pneumatic circuit with the outlet of the interstitial chamber is controlled by the pneumatic control circuit. This pneumatic control circuit includes a compressor to supply the necessary working pressure, together with a pressurestat that is connected to the electric control circuit and which has the function of detected drops in pressure within the control circuit, and a diffuser box which allows the pressurisation of the discharge mouth or screen valve, so that the latter opens.

According to the invention, the pneumatic vacuum or pressure circuit includes an apparatus for the generation of a vacuum or pressure, together with a vacustat / pressurestat which emits a signal when the pressure or vacuum existing in the circuit itself attains a certain value, together with a pressure or vacuum gauge which shows the value of the pressure or vacuum existing in the said circuit.

The electric control circuit includes a microprocessor which is connected to the vacuum / pressure gauge of the pressure or vacuum circuit, the pressurestat of the control circuit, alarm devices which are activated when the pressurestat detects a fall in the pressure within the control circuit, and a button which on being activated allows the pressure existing within the chamber to be monitored, and also permits regeneration of the chamber when the system detects loss of vacuum or pressure within it.

According to the invention, the system permits the elimination of the membrane valve if at least one measuring device is added to the pneumatic pressure or vacuum circuit, to emit a signal when the pressure or vacuum within the said circuit attains a preset maximum or minimum value, respectively.

In this case the electric control circuit will include a microprocessor connected to the pressure or vacuum measurement apparatus, from which it will receive the above - mentioned signals, and will have alarm indicators and a button which on being activated will give rise to the testing and regeneration of the chamber.

On eliminating the membrane valve in the control circuit, the latter will comprise only a compressor connected to the screen valve, which it will control.

In this case, the drop in pressure or vacuum, and therefore the existence of leaks, will be detected by measurement apparatus included in the pressure or vacuum circuit, when the screen valve opens and the said pressure or vacuum circuit is connected to the interstitial chamber.

### DESCRIPTION OF THE DRAWINGS

As a complement to this description, and with the aim of aiding towards greater understanding of the characteristics of the invention, this specification includes, as an integral part of the same, a set of drawings which, as illustrations and not limitations, the following are shown:
- Figure 1 shows a diagrammatic view of the system, under normal conditions of working, connected to an interstitial chamber in which a vacuum has been created.
- Figure 2 shows a diagrammatic view of the same system, in the condition of prior warning of leakage.
- Figure 3 shows a diagrammatic view of the same system, in a phase prior to testing the interstitial chamber, checking on the tightness of the vacuum circuit.
- Figure 4 shows a diagrammatic view of the same system during the testing of the interstitial chamber.
- Figure 5 shows a diagrammatic view of the same system during regeneration of the vacuum within the interstitial chamber.
- Figure 6 shows a diagrammatic view of an embodiment of this system, under normal working conditions and connected to an interstitial chamber.
- Figure 7 shows a diagrammatic view of the same embodiment shown in the previous diagramme under the condition of prior warning of leakage.
- Figure 8 shows a diagrammatic view of the same embodiment in a phase prior to the testing of the interstitial chamber, in which the tightness of the vacuum circuit is tested.
- Figure 9 shows a diagrammatic view of the same embodiment during testing of the interstitial chamber.
- Figure 10 shows a diagrammatic view of the same embodiment during the regeneration of the vacuum within the interstitial chamber.

### PREFERENTIAL EMBODIMENT OF THE INVENTION

In the above - mentioned figures a partial view of a tank (1) is given, this having double walls (2 and 3) which create an interstitial chamber (4) between them, in which a vacuum has been created; the said chamber (4) is equipped with an outlet (5) on which there is a vacuum gauge (6) which measures the vacuum created within the chamber (4) together with a closure valve (7).

The purpose of this system is to detect any possible leaks from the interstitial chamber (4), the said system being composed of a pneumatic control circuit (8), a pneumatic vacuum circuit (9), which is connected to the outlet (5) by means of a screen valve (10), an electric control circuit (11) and a membrane valve (12) which is mounted on the outlet (5) of the interstitial chamber (4) and which forms the means of closing a discharge mouth (13) defined within the pneumatic control circuit (8).

This pneumatic control circuit (8) includes a compressor (14), a pressurestat (15) and a diffuser box (16) which sends the pressure on to the discharge mouth (13) or to the screen valve (10) to open them.

The pneumatic vacuum circuit (9) includes apparatus (17) to create a vacuum, a vacustat (18) which emits a signal when the vacuum attains a pre-set level, and a vacuum gauge (19) which shows the value of the vacuum within the circuit (9).

The electric control circuit (11) is composed of a microprocessor (20) which is connected to the vacustat (18), the pressurestat (15), an acoustic alarm indicator (21), a luminous alarm indicator (22), and to a button (23) which on being activated causes the system to test the chamber (4).

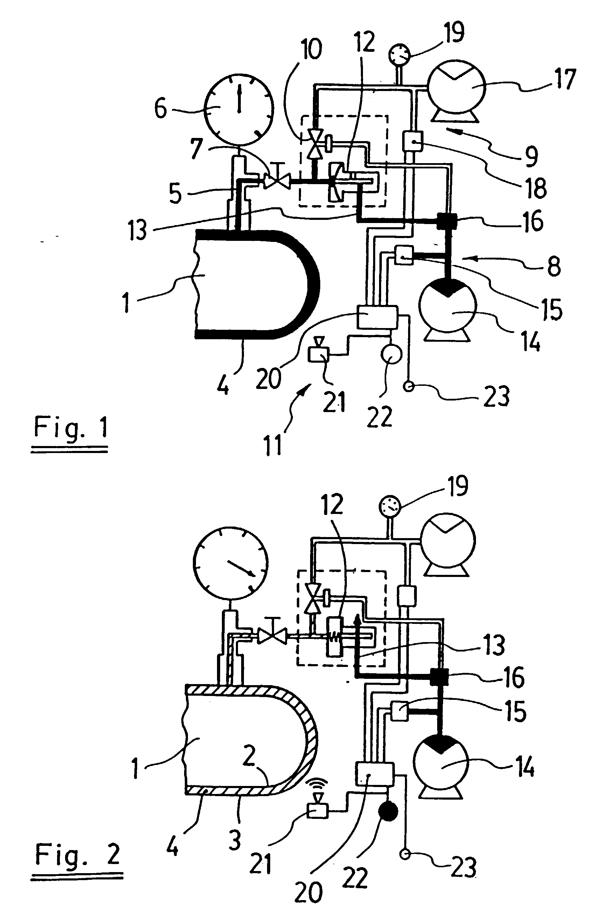

With this arrangement of elements, under normal working conditions as shown in figure 1, the system sends pressure to the discharge mouth (13) of the circuit (8), preventing the membrane valve (12) from discharging pressure through the mouth (13), on the said valve (12) being in closed position due to the existence of a certain level of vacuum within the interstitial chamber (4).

When there is a leak in the chamber (4) the system goes into the condition of prior warning of leakage, as shown in figure 2, in which due to the loss of vacuum within the interstitial chamber (4) the membrane valve (12) goes into open position, so that the pressure within the circuit (8) is lost through the discharge mouth (13). This loss of pressure is detected by the pressurestat (15), which gives rise to the activation, by the microprocessor (20) of the acoustic alarm (21) and the luminous alarm (22) for prior warning of leakage.

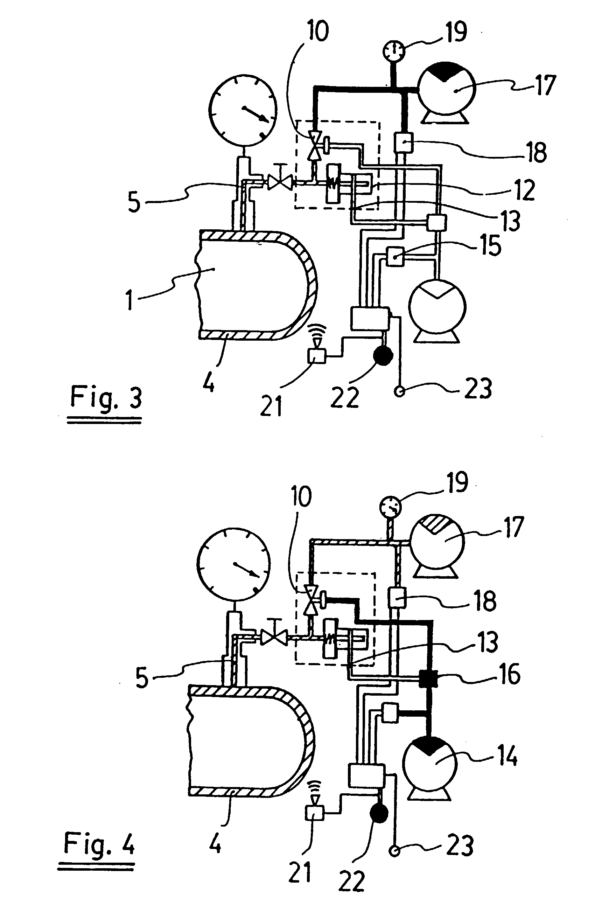

Once the prior warning of leakage alarm has been activated, it is possible to check the interstitial chamber by pressing the button (23); this check is composed of two phases, and in the first of these, as shown in figure 3, a vacuum is created within the circuit (9) this vacuum being monitored during a certain period of time by means of a vacustat (18) which is connected to the microprocessor (20) with the aim of checking the tightness of the vacuum circuit. Once the tightness of the said circuit (9) has been checked, the system goes into the following phase, as shown in figure 4, opening the screen valve (10) which is attained through control by the control circuit (8).

When the screen valve (10) is opened, the system waits for a few seconds so that the vacuum within the circuit (9) and that within the chamber (4) become equal, making it possible to check the value of this vacuum by means of the reading given by the vacuum gauge (19).

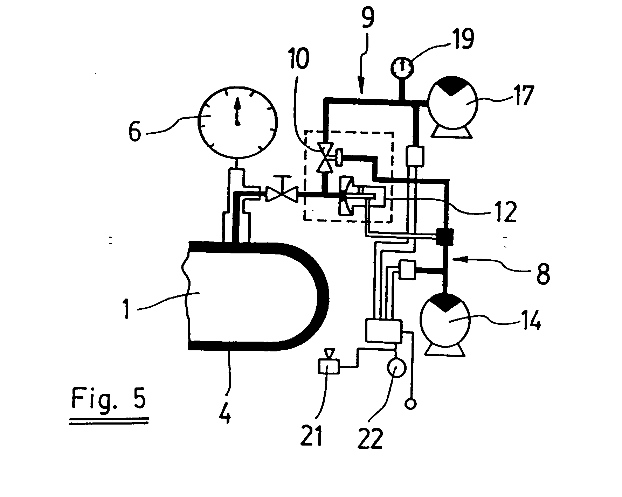

Once it has been checked that the vacuum within the interstitial chamber (4) has descended to below the reference value, the system permits the regeneration of the vacuum within the chamber (4) as is shown in figure 5, maintaining the screen valve (10) open and keeping the apparatus (17) working, until such time as the vacustat (18) detects a vacuum that is equal to the reference value, and thereby giving rise to the closure of the screen valve (10). The deactivation of the acoustic (21) and luminous (22) alarms and the stoppage of the vacuum generating apparatus (17) is brought about when the microprocessor (20) returns to the normal operational condition, as shown in figure 1.

The microprocessor (20) controls the time taken to regenerate the vacuum within the chamber; if the system is unable to regenerate the vacuum within the said chamber, the alarm indicating the existence of a leak which prevents the said regeneration remains on.

In this embodiment, the system works with a vacuum within the interstitial chamber. Nevertheless, it may easily be adapted to function using pressure rather than a vacuum, replacing the vacuum - generating apparatus (17) with a compressor, replacing the vacustat (18) with a pressurestat, and the vacuum gauge (19) with a manometer.

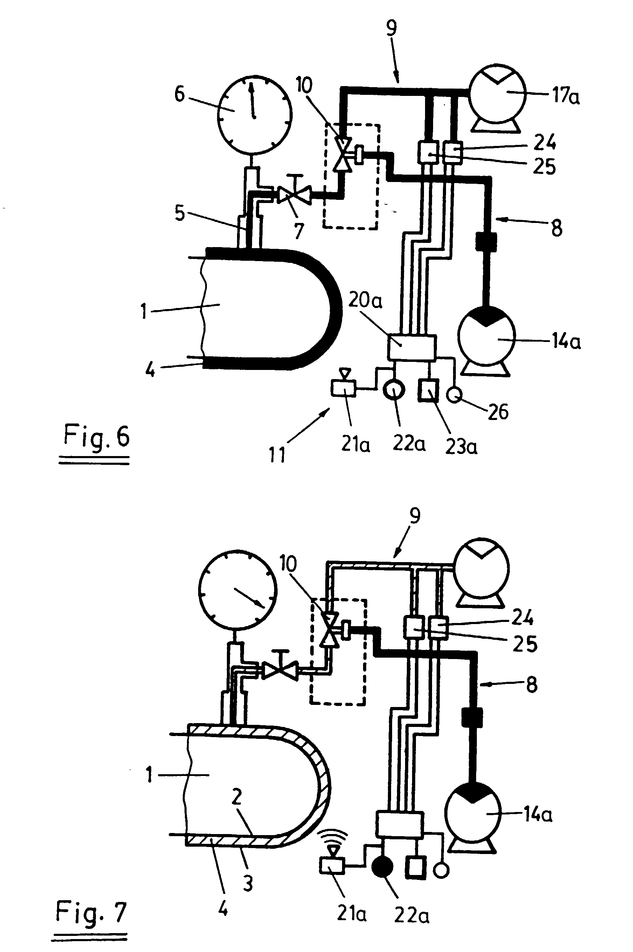

In the other embodiment of the system, shown in figures 6 on, the pneumatic control circuit (8) only includes a compressor (14a) which brings about the opening of the screen valve (10) when it sends pressure on to it, having eliminated the screen valve (12) and the outlet to the outside (13) from the said circuit.

In this embodiment, the pneumatic vacuum circuit (9) includes the apparatus (17a) for generating a vacuum, together with two measurement apparatus represented by the vacustats (24 and 25). These vacustats (24 and 25) emit a signal when the vacuum attains certain maximum and minimum levels, respectively.

The electric control circuit (11) is composed of a microprocessor (20a) which is connected to the vacustats (24 and 25), the acoustic alarm indicator (21a), a luminous alarm (22a), and to a button (26) for regenerating the chamber (4).

With this arrangement of elements, under normal operating conditions the chamber (4) and the circuit (9) are subjected to a vacuum, and the system automatically and regularly checks for the existence of leaks in the chamber; for this purpose it applies a certain level of vacuum to the circuit (9) while keeping the valve (10) closed, and checking by means of the signals from the vacustats (24 and 25) that there are no leaks in the said circuit (9). It then goes on to open the screen valve (10) equalising the levels of vacuum within the circuit (9) and the chamber (4). During this process of equalisation, the chamber gains part of the vacuum existing within the circuit (9) which may be sufficient to counterbalance any minor leaks due to the existence of micropores, thereby regenerating the chamber automatically.

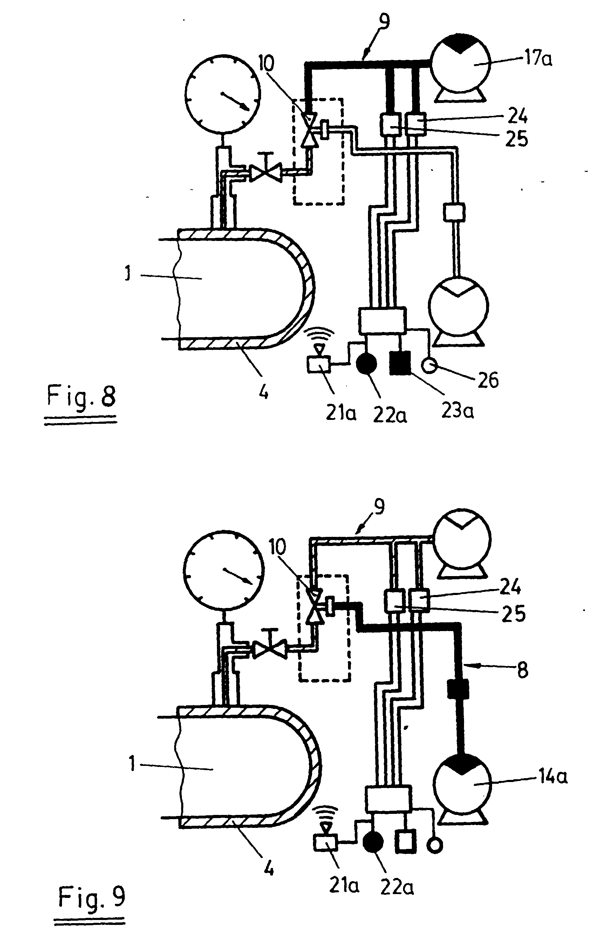

This check for the existence of leaks is the same as that which is used for the testing of the chamber, as shown in figures 8 and 9, with the difference that testing may be requested at any time by acting on the button (23a) for testing.

If during checking the microprocessor (20a) detects that the vacuum arising from equalising that within the chamber (4) and the pneumatic circuit (9) is below the preset minimum limits, then a condition of prior warning of leaks is created, and the alarms (21a and 22a) are activated, showing the existence of a leak in the chamber (4).

To re - establish the vacuum within the chamber it is necessary to press the button (26) for regenerating the vacuum.

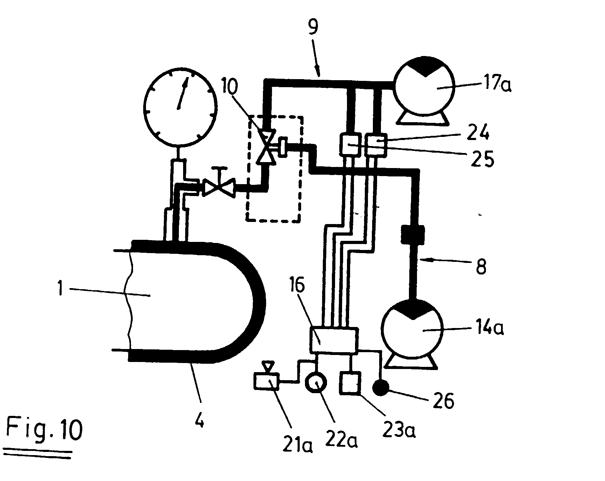

During regeneration the vacuum generator (17a) works continuously, and the screen valve (10) remains open, as is shown in figure 10, until such time as a preset level of vacuum is attained, this being measured by one of the vacustats (24 or 25); when the said level of vacuum is attained, the chamber will have been regenerated and the microprocessor (20a) deactivates the alarms (21a and 22a) and the system returns to its normal working condition.

In the case of the system not being able to regenerate the vacuum, due to the existence of major leaks in the chamber (4), then a continuous alarm is maintained, while the tank (1) will have to be replaced or repaired.

It is not considered necessary to offer a longer description, as any expert in this field will understand the scope of the invention and the advantages to be derived from the same.

The terms in which this description has been drawn up are always to be understood in a broad and not a limiting sense.

The materials, forms, sizes and arrangement of the elements are susceptible to change, on condition that this does not give rise to any alteration in the essential characteristics of the invention, as claimed below.

## Claims

1. A system for the detection of leaks in interstitial chambers which are under conditions of vacuum or pressure, and which are equipped with an outlet on which there is a vacuum gauge or manometer and a valve for closure, characterised by the fact that it includes a pneumatic control circuit (8), and pneumatic vacuum or pressure circuit (9) which is connected to an outlet (5) of the interstitial chamber (4) by means of a screen valve (10) and an electric control circuit (11).

2. A system, according to the above claim, characterised in that a membrane valve (12) is mounted on the outlet from the interstitial chamber, forming the means of closing an outlet mouth (13) as defined by the pneumatic control circuit (8).

3. A system, according to the above claims, characterised in that the pneumatic control circuit (8) includes a compressor (14), a pressurestat (15) and a diffuser box (16) which sends pressure to the discharge mouth (13) or to the screen valve (10) to bring about its opening.

4. A system, according to the above claims, characterised in that the pressure or vacuum pneumatic circuit (9) includes an item of apparatus for generating pressure or a vacuum, a pressurestat - vacustat (18) which emits a signal when the pressure or vacuum within the circuit (8) attains a preset level, together with a manometer or vacuum gauge (19) to show the level of the pressure or vacuum existing within the circuit (9).

5. A system, according to the above claims, characterised in that the electric control circuit comprises a microprocessor (20) which is connected to the pressurestat - vacustat (18) of the pneumatic circuit (9), the pressurestat (15) of the pneumatic control circuit (8), an acoustic alarm indicator (21), a luminous alarm indicator (22) and a button (23) which on being activated causes the system to carry out the testing and regeneration of the vacuum or pressure within the interstitial chamber (4).

6. A system, according to claim 1, characterised in that the pneumatic pressure or vacuum circuit (9) includes pressure or vacuum generating apparatus (13a) and at least one item of measuring apparatus (24 and 25) which emits a signal when the pressure or vacuum within the said circuit (9) attains a maximum or minimum reference level, respectively.

7. A system, according to claims 1 to 6, characterised in that the electric control circuit (11) includes a microprocessor (20a) connected to the measurement apparatus (24 and 25) of the vacuum or pressure pneumatic circuit (9), alarm indicators (21a and 22a) and two buttons, for testing the chamber and regenerating the vacuum or pressure within the same.

8. A system, according to claims 1, 6 and 7, characterised in that the pneumatic control circuit (8) includes a compressor (14a) connected to a screen valve (10), and which brings about its opening by pressurising it.
